(19) Europäisches Patentamt
European Patent Office
Office européen des brevets

(11) **EP 3 344 013 B1**

(12) **EUROPEAN PATENT SPECIFICATION**

(45) Date of publication and mention
of the grant of the patent:
**07.05.2025  Bulletin 2025/19**

(21) Application number: **17210916.7**

(22) Date of filing: **28.12.2017**

(51) International Patent Classification (IPC):
*H05B 45/347* (2020.01)   *H05B 45/10* (2020.01)
*H05B 45/46* (2020.01)    *B60Q 1/04* (2006.01)

(52) Cooperative Patent Classification (CPC):
**H05B 45/10; H05B 45/347;** B60Q 1/04;
H05B 45/46; Y02B 20/30

(54) **DRIVER CIRCUIT OF LIGHT SOURCES, IN PARTICULAR FOR A VEHICLE LIGHT**

TREIBERSCHALTUNG FÜR LICHTQUELLEN, INSBESONDERE FÜR EIN FAHRZEUGLICHT

CIRCUIT D'ATTAQUE DE SOURCES LUMINEUSES, EN PARTICULIER POUR UN PHARE DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **29.12.2016  IT 201600132350**

(43) Date of publication of application:
**04.07.2018  Bulletin 2018/27**

(73) Proprietor: **MARELLI AUTOMOTIVE LIGHTING
ITALY S.p.A.
10078 Venaria Reale (TO) (IT)**

(72) Inventors:
• **RUSSO, Gerardo
  10078 Venaria Reale (Torino) (IT)**
• **MANFREDA, Giulio
  10078 Venaria Reale (Torino) (IT)**
• **IELLINA, Matteo
  10078 Venaria Reale (Torino) (IT)**

(74) Representative: **Chimini, Francesco
Jacobacci & Partners S.p.A.
Piazza Mario Saggin, 2
35131 Padova (IT)**

(56) References cited:
**EP-A1- 3 258 745       WO-A1-2013/076685
US-A1- 2006 108 933     US-A1- 2007 273 681
US-A1- 2008 111 800     US-A1- 2010 026 203
US-A1- 2010 134 040     US-A1- 2010 327 835
US-A1- 2016 302 270**

• **POWER INTEGRATIONS: "DPA422-426 DPA-
Switch Family Highly Integrated DC-DC
Converter ICs for Power over Ethernet & Telecom
Applications Output Power Table", 1 June 2015
(2015-06-01), XP055743336, Retrieved from the
Internet <URL:https://ac-dc.power.com/sites/
default/files/product-docs/
dpa_family_datasheet.pdf> [retrieved on
20201023]**

**Description**

The present invention relates to a driver circuit of lighting sources, in particular for an automotive headlight. More precisely, the invention relates to an adaptive electronic control for one or more lighting sources that may undergo large variations of their activation voltage (Vforward), such as OLED or LED. Such variations of the activation voltage are due for example to a temperature change, or to a voltage selection or to a flow selection.

However, the invention can more generally be applied when there is the need to control a supply voltage as a function of variations of voltage drops on the branch comprising the lighting source to be supplied. Such variable voltage drops to be compensated are typically due to the activation voltage at the terminals of the lighting source, as mentioned above, but may also be caused by voltage drops on other devices connected in the lighting branch.

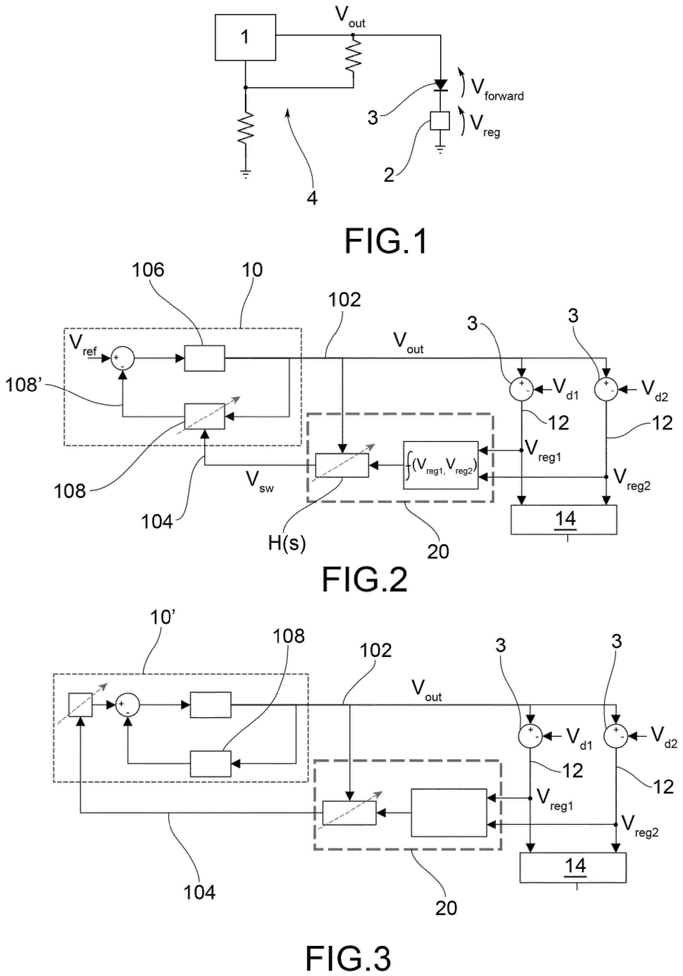

Conventionally, an adaptive control circuit provides for supplying a supply voltage via a power supply 1 according to the circuit diagram in figure 1. A current controller 2 is connected in series to the lighting source 3 to maintain the drive current of the lighting source at a predetermined value.

Typically, power supplies have a feedback circuit, for example implemented with a voltage divider 4 and an operational amplifier which compares a partition of the output voltage Vout with an internal reference voltage, so as to keep the output voltage constant.

In a conventional circuit of the type described in figure 1, a variation of the activation voltage Vforward of the lighting source 3 results in a variation of the voltage drop Vreg on the current controller 2. In some cases, a lowering of the voltage drop at the terminals of the lighting source may cause a large increase in the voltage on the current controller, with the result that the power absorbed by the controller or in general by the system must be used in some way. For example, the current controller or the electronic card will have to be oversized from the thermal point of view. WO 2013/076685 A1 discloses a LED driver circuit comprising switch driver circuit means suitable for generating a driver voltage which depends in a substantially linear manner on the power supply voltage. US 2016/302270 discloses a power supply including a power converter configured to convert an input voltage to a target output DC voltage in response to a feedback signal and a regulator configured to generate an output power status signal, which maybe in one of two states depending whether an output current from the regulator is above or below a target current over a preset time duration. US 2006/108933 A1 discloses a driving apparatus for LEDs including a DC-to-DC converter, a first constant-current circuit, a second constant-current circuit, and a feedback circuit. The DC-to-DC converter outputs a direct-current voltage according to a feedback voltage. US 2010/327835 A1 discloses a voltage regulator system comprising circuitry for generating a regulated output voltage responsive to an input voltage and switching control signals. US 2010/134040 A1 discloses a power source providing an output voltage to drive a plurality of light emitting diode (LED) strings. A feedback controller monitors the tail voltages of the LED strings to identify the minimum tail voltage and adjusts the output voltage based on a relationship between the minimum tail voltage and a reference voltage. However, the above cited problem still remain unresolved. US 2008/111800 A1 and US 2010/026203 A1 disclose driving apparatus for use in a backlight module for driving a plurality of LED devices wherein feedback network provides a regulation signal based on the voltage drop of each of the LED devices to adjust the output power supply voltage. EP 3 258 745 A1 discloses an input voltage stabilization circuit for a rear combination lamp a vehicle wherein a feedback unit is configured to provide information about a highest of voltage values required for a plurality of individual OLEDs, as a feedback to a DC-DC converter. US 2007/273681 A1 discloses a circuit providing power to an array of LEDs wherein a selector circuit receives feedback signals from a plurality of LED loads and a capacitor operating as a valley detector holds the lowest voltage that comes from the feedback selector and provides a feedback voltage such that the power supply provides a voltage just high enough to illuminate all the LEDs at their rated current.

The object of the present invention is to propose a control circuit of lighting sources, for example of the LED or OLED type, able to adjust the value of the supply voltage to variations in the voltage drop on the lighting sources.

In other words, the object of the invention is to maintain the voltage drop on the current controller at an optimal predetermined value upon the variation of the voltage drop on the lighting sources, and improving the stability of the driver circuit while allowing an immediate response to restore the voltage when it is insufficient.

Said object is achieved with a driver circuit according to claim 1 and with a vehicle light according to claim 7. The dependent claims describe preferred embodiments of the invention.

According to claim 1, the driver circuit comprises an adjustable voltage power supply, having a control loop of the output supply voltage which includes an adjustable feedback block, that is, having an input terminal accessible from the outside for its adjustment. The adjustable feedback block is adapted to provide an outputs feedback signal to be compared with an internal reference voltage of the power supply.

The adjustable power supply supplies at least one lighting branch comprising at least one lighting source.

A current control device is connected in series with a respective lighting branch and is adapted to adjust the control current circulating in the lighting branch.

The control circuit further comprises a feedback network that is adapted to provide an adjustment signal to the adjustable feedback block, so as to adjust the output power supply voltage as a function of the voltage drop at the terminals of the at least one current control device.

In one embodiment, the adjustable feedback block comprises an electrically adjustable impedance element having a control terminal connected to the output of the feedback network and through which it is possible to vary the value of such impedance based to a control signal supplied by the feedback network as a function of the voltage drop at the terminals of the current control device.

In one embodiment, the feedback block of the adjustable power supply comprises a voltage divider, comprising a first impedance between a feedback terminal and ground and a second impedance between the output terminal of the adjustable power supply and the feedback terminal. The second impedance in turn comprises a constant impedance and the electronically adjustable impedance element described above.

Therefore, depending on the value of the voltage drop at the terminals of the current control device, the variable impedance assumes different values that determine the overall impedance value which affects the feedback block of the adjustable power supply and thus the output supply voltage level.

In one embodiment, the feedback network has a transfer function which varies according to the voltage drop at the terminals of the current control device and which is adapted to change the value of the output supply voltage to bring the voltage drop at the terminals of the current control device to a predetermined value with at least two different dynamics, depending on whether said voltage drop at the terminals of the control device is greater or smaller than said predetermined value.

For example, the transfer function has a fast dynamic in case of lowering of the voltage drop at the terminals of the current control device below the predetermined value, and a slow dynamic in case of increase of the voltage drop at the terminals of the current control device above said predetermined value. In particular, the slow dynamic is selected in such a way that an on-off modulation of the current of the current controller, for example for a power supply mode PWM of the lighting branch, is not controlled by the feedback network. The fast dynamic is instead selected so as to quickly adapt the level of the output supply voltage to higher values, so as to activate with the least possible delay a lighting branch which requires a greater voltage drop at its terminals to allow the powering of the lighting source.

Hence the need to have a transfer function of the feedback network with at least two different dynamics.

In a possible embodiment, the feedback network comprises a feedback selector circuit defining two different feedback circuit paths that are activated in a selective way according to the level of the voltage drop at the terminals of the current control device.

In particular, this feedback selector circuit has a control node operatively connected to the control terminal, an upper branch that connects the control node to the output terminal of the adjustable power supply by means of a feedback impedance, for example made with a resistive element, a lower branch that connects the control node to ground by means of a capacitor, and at least one intermediate branch connecting the control node to a respective current control device by means of at least one diode. In this way, when the voltage at the terminals of the current control device falls below a voltage value given by the difference between the voltage of the control node and the forward voltage at the terminals of the diode, the capacitor will discharge quickly through the diode and the current control device. In this way, the value of the control node voltage varies rapidly and therefore the value of the output supply voltage also varies rapidly. For example, the discharge time of the capacitor is of the order of microseconds.

When instead the voltage at the terminals of the current control device exceeds the voltage value given by the difference between the voltage of the control node and the forward voltage at the terminals of the diode, the diode switches to a high impedance status, allowing the capacitor to charge through the resistive element. In this case, the dynamics of the feedback network transfer function is given by the time constant RC, where R is the feedback impedance value and C is the capacitance of the capacitor. For example, the values of R e C can be selected so as to implement a slow time constant RC, for example of the order of a few seconds. In this way, the value of the control node voltage varies according to such a slow time constant, and with it the value of the output supply voltage.

The feedback network comprises a feedback selector circuit with active components, comprising a field effect transistor, such as a P-MOS (even though a bipolar transistor may be equivalently used) having the gate terminal connected to the output terminal of the adjustable power supply by means of a resistive element and connected to the current control device, the source terminal operatively connected to the control terminal and the drain terminal connected to ground by means of a resistance. The feedback network further comprises a capacitor connected between the source terminal and the drain terminal, and an operational amplifier having the inverting input terminal connected to the drain terminal, the non-inverting input terminal to a reference voltage, and the output terminal connected to the source terminal. In this way, when the voltage at the terminals of the current control device falls below the voltage value given, with good approximation, by the difference between the voltage of the source terminal and the gate-source threshold voltage of the P-MOS switch, the channel resistance of the P-MOS reduces rapidly so as to quickly discharge the capacitor placed between source and drain. In this way, the output of operational amplifier, and then the control node voltage value, varies rapidly. Due to the action of the control signal, the value of the output supply voltage also rapidly increases.

When the voltage at the terminals of the current control device exceeds the voltage value given by the difference between the voltage of the source terminal and the gate-source threshold voltage of the P-MOS, the P-MOS is cut off and the output of the operational amplifier, and thus the value of the control node voltage, varies according to the time constant RC given by the resistor connected between the inverting terminal of the amplifier and ground, and by the capacitor placed between drain and source. Due to the action of the control signal, the value of the output power supply voltage also decreases according to such a dynamic.

In a further embodiment variant which is not part of the claimed invention, the feedback network is implemented using a microprocessor. For example, the feedback network comprises a multichannel analog-digital converter ADC adapted to detect the supply voltage in output to the adjustable power supply and the voltage drop at the terminals of each current control device, a microprocessor, and a digital-analog converter DAC adapted to generate the control signal.

It should be noted that, while in the analog embodiments described above the analog circuit is affected by the changes in the voltage drop at the terminals of the current control device without continuously detecting such voltage drop, if not nonlinearly, in the embodiment by means of a microprocessor the voltage drop is directly detected and the nonlinearity is obtained via software.

In one embodiment, the feedback circuit of the adjustable power supply

Further features and the advantages of the driver circuit according to the invention shall be made readily apparent from the following description of preferred embodiments thereof, provided purely by way of a non limiting example, with reference to the accompanying figures, in which:

- figure 1 is an example of a control circuit for lighting sources according to the prior art;
- figure 2 is a block diagram of the driver circuit according to the invention in a first embodiment;
- figure 3 is a block diagram of the driver circuit of a comparative example which is not part of the claimed invention;
- figure 4 is a circuit diagram implementing the block diagram in figure 2 in one example;
- figure 5 is a diagram showing the curve of the output voltage of the voltage controller as a function of the voltage drop on the current controller;
- figure 6 shows the same circuit diagram in figure 4 but provided with multiple lighting branches;
- figure 7 is a circuit implementation of the block diagram in figure 3;
- figure 8 is a circuit implementation with active components of the block diagram in figure 2 in accordance with the claimed invention;
- figure 9 is a block diagram of the driver circuit according to a comparative example which is not part of the claimed invention;
- figure 10 is a circuit implementation of the block diagram in the previous figure; and
- figure 11 shows an exemplary automotive headlight incorporating the driver circuit of lighting sources according to the invention.

In the following description, the term "connected" refers to either a direct electrical connection between two circuits or circuit elements and to an indirect connection through one or more active or passive intermediate elements. The term "circuit" may denote either a single component or a plurality of components, active and/or passive, connected together to obtain a predetermined function. Moreover, where one can employ a bipolar junction transistor (BJT) or a field effect transistor (FET), the meaning of the terms "base", "collector", "emitter" includes the terms "gate", "drain" and "source", and vice versa. If not indicated otherwise, finally, NPN type transistors may be employed in place of PNP transistors, and vice versa.

The control circuit according to the invention is adapted to control lighting sources 3 that undergo a variation of the voltage drop at their terminals during their operation, for example due to changes in temperature, or over time (for example, due to aging of the components or to a short circuit of a component), as is the case in LEDs and OLEDs.

According to one aspect of the invention, by means of a non-linear feedback network which forms different paths for the feedback current, which correspond to different dynamics of the transfer function of the feedback network, the control circuit is able to set a node of interest at a specific voltage level, Vreg, regardless of the voltage drop at the terminals of the lighting source 3.

In particular, the voltage drop can be set on a current control device, which can be a simple impedance or an active component, such as a current controller, which regulates the driving current absorbed by the lighting source.

Therefore, according to the feedback current path, the control circuit can respond with different dynamics to the variations in the voltage drop to be stabilized, Vreg.

In the following description, elements common to the various embodiments of the control circuit according to the invention, or equivalent to each other, will be indicated by the same reference numerals.

Figure 2 shows a block diagram of the architecture of a control circuit according to the invention, in one embodiment.

The control circuit comprises a voltage supply 10 adapted to generate an output supply voltage Vout on an output terminal 102 thereof adapted to feed one or more lighting sources 3.

The voltage supply 10 may for example be implemented with a DC/DC or with an LDO.

In any case, the voltage supply 10 is of the adjustable type, i.e. has an adjustment terminal 104 accessible to be connected to an external feedback network.

In the example in figure 2, power supply 10 comprises a control loop comprising a gain block 106 and a feedback block 108. Output 108' of the feedback block is compared with an internal reference voltage Vref.

The feedback block 108 is adjustable and is accessible by means of the adjustment terminal 104.

In the example shown in figure 2, the control circuit feeds two lighting branches 12.

The driving current circulating in the lighting branches 12 is established by respective current control devices 14, which can be implemented with passive components, for example with a resistor, or with active components, for example with a current controller.

In the example shown in figure 2, the current control devices 14 are connected between the lighting branches 12 and ground, i.e. in low-side configuration. Of course, the current control devices 14 can be connected between the supply terminal 102 and the lighting sources 3, i.e. in high-side configuration.

In figure 2, Vreg1, Vreg2 indicate the voltage drops to be stabilized at the terminals of the current control devices 14 (in general, in the following description also referred to as Vregk).

Moreover, Vd1 and Vd2 indicate the voltage drops at the terminals of the lighting source 3, which may vary for the reasons described in the introductory part of the present description, for example as a function of temperature, and which result in a variation of voltage Vregk.

The control circuit comprises the non-linear feedback network 20, the output of which is operatively connected to the adjustment terminal 104, and thus to the feedback block 108 if the adjustable power supply 10.

The non-linear feedback network 20 has a transfer function H(s) variable as a function of the value of signals Vregk and Vout. The non-linear feedback network 20 therefore provides a control signal Vsw to the adjustment terminal 104 which alters the feedback block 108 so as to adjust the output power supply voltage Vout as a function of the voltage drops Vregk at the terminals of the current control device(s) 14.

Figure 3 shows a block diagram of the control circuit of a comparative example which is not part of the claimed invention.

In this example, the adjustable power supply 10' has a non-adjustable feedback block 108', but the adjustment terminal 104, connected to the output of the non-linear feedback network 20, acts on a reference voltage setting network that defines the value of the reference voltage Vref internal to the power supply.

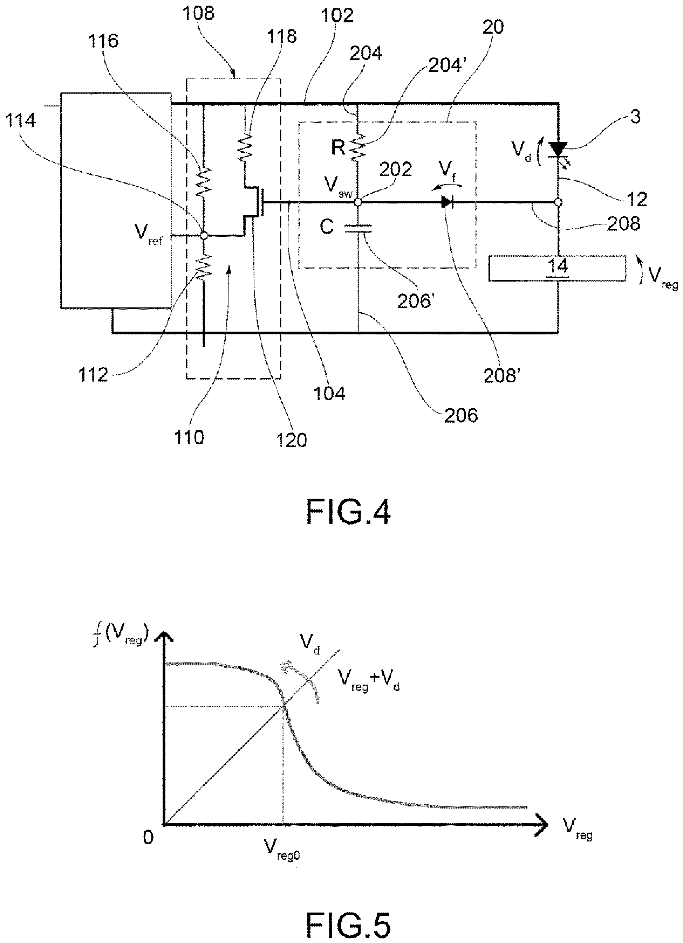

Figure 4 is a circuit diagram of an exemplary embodiment of the circuit architecture in figure 2. The current control device 14 is implemented with a current controller, which requires a minimum voltage drop to ensure the regulation of the current.

More in detail, the non-linear feedback network 20 comprises a feedback selector circuit having a control node 202 operatively connected to the control terminal 104, an upper branch 204 that connects the control node to the output terminal 102 of the adjustable power supply 10 by means of a feedback impedance 204', for example with a resistive element, a lower branch 206 that connects the control node 202 to ground by means of a capacitor 206', and at least one intermediate branch 208 connecting the control node 202 to the current controller 14 by means of at least one diode 208'.

In particular, diode 208' has its anode connected to the control node 202 and the cathode connected to the current controller 14 terminal which is at the voltage Vreg to be stabilized.

The feedback selector circuit thus defined implements two circuit paths for the feedback current, which are activated selectively as a function of the value Vreg, as will be described hereinafter.

The adjustable feedback block 108 of the adjustable power supply 10 comprises a voltage divider 110. This voltage divider 110 comprises a first resistor 112 between a feedback terminal 114 and ground, a second resistor 116 between the output terminal 102 of the adjustable power supply and the feedback terminal 114, and a third resistor 118 also connected between the output terminal 102 and the feedback terminal 114, but by means of an electrically adjustable impedance element 120, such as a MOS-FET, the gate terminal of which coincides with, or is operatively connected to, the feedback terminal 104.

Defining by:

Vsw the voltage on the control node 202,
Vf the forward voltage at the terminals of diode 208,
as soon as Vreg falls below level Vsw - Vf, the non-linear feedback network 20 provides a fast response by discharging capacitor 206' through diode 208' and the current generator 14, until the control node 202 is at the new value Vreg + Vf. Such a voltage value of the control node 202, which corresponds to the value of the control signal Vsw, causes the increase of the impedance value of the electrically adjustable impedance element 120. Consequently, the divider of the feedback block 108 is unbalanced upwards, so as to result in an increase of the output supply voltage Vout which, in turn, increases the value of Vreg.

When the Vreg exceeds Vsw - Vf, on the other hand, this triggers a slow response since diode 208' is in the high impedance status and decouples the control node 202 from the voltage drop Vreg. In this condition of the feedback selector circuit, capacitor 206' is charged through the resistive element 204'. At the charging of capacitor 206', voltage Vsw on the control node increases so as to reduce the impedance value of the electrically adjustable impedance element 120. In this way, divider 108 becomes unbalanced downwards, thus lowering the output supply voltage Vout and consequently the voltage drop to be adjusted Vreg.

The response dynamic of the feedback network 20 is in this case given by the time constant RC, where R is the resistance of the resistive element 204' and C is the capacitance of capacitor 206'.

Vreg is thus stabilized around a set-point value (Vout0, Vreg0), in which the current from the upper branch 204 of the feedback selector circuit circulates mainly in the intermediate branch 208 and only a fraction thereof flows through capacitor 206', in order to compensate for parasitic losses. The level of voltage Vsw of the control node 202 therefore remains constant.

The set-point, i.e. balance (Vout0, Vreg0), of the control circuit can thus be calculated by solving the equations

$$\begin{cases} Vout = Vref\left(1 + \dfrac{R_1 \| (R_0 + R_M(Vreg + Vf - Vref))}{R_2}\right) = f(Vreg) \\ Vreg = Vout - Vd \end{cases}$$

where Vref is the voltage on the feedback terminal 114 and Vd is the forward voltage drop on the lighting source 3.

The solution of this system of equations is shown in figure 5.

In one embodiment, in which the electrically adjustable impedance element consists of a field effect transistor, such as a MOS-FET, the value Vreg0 can be estimated as Vreg0 = Vref + VGS_TH - Vf, where VGS_TH is the gate-source threshold voltage of the electrically adjustable impedance element 120.

It should be noted that the balance point is defined by the value of the gate-source threshold voltage VGS_TH.

In particular, the adjustment of the voltage drop Vreg at the terminals of the current control device 14 is carried out continuously due to the intrinsic characteristic of the field effect transistor MOS-FET or BJT (the resistance of the transistor, in fact, varies continuously as a function of the voltage applied between gate and source). Consequently, the second impedance 116 will always be in parallel (or, in an embodiment variant, in series) to the electrically adjustable impedance element 120.

To this end, it should be noted that in an alternative embodiment variant, the third impedance 118 could also not be present.

Due to the two different feedback dynamics, the control circuit can be adequately sensitive to the intrinsically slow decrease of the voltage drop on the lighting sources, for example due to ageing and temperature rise, and insensitive to the rapid rising edges of voltage Vreg at the terminals of the current control device, which are generated when a lighting source is temporarily turned off, for example in control modulation situations PWM, or during the generation of an animation sequence. In this way, a more stable output supply voltage Vout can also be obtained during a modulation PWM or an animation, resulting in improved electromagnetic performance, especially when using cables to control the lighting sources.

Alternatively, the parameters of the control circuit, in particular of the non-linear feedback network, may be set so as to achieve fast dynamics in response to an increase of the Vreg and slower dynamics in response to a lowering of the Vreg.

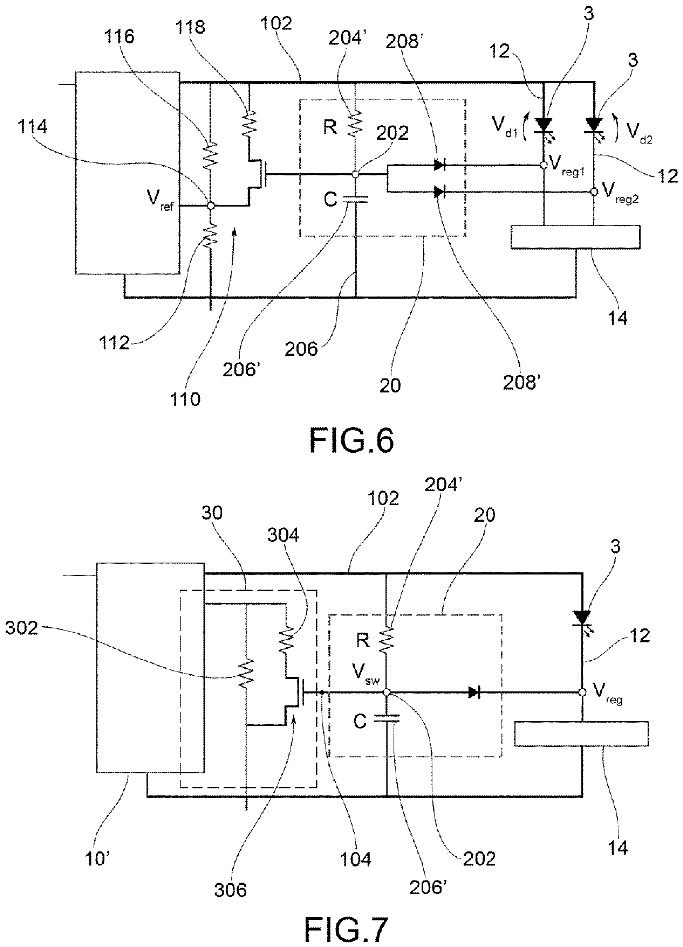

Figure 6 shows a circuitry implementation similar to that described with reference to figure 4, in which multiple lighting branches 12 are powered.

In this case, the non-linear feedback network 20 is modified by providing a diode 208' for each lighting branch 12.

The equations shown above to determine the balance point of the circuit are still valid, considering Vreg = min {Vreg1, Vreg2} and Vd = max {Vd1, Vd2}, where Vd1 and Vd2 are the voltage drops on the two lighting branches 12.

By requiring a limited number of elementary components, this architecture also represents a relatively cost-effective and reliable solution.

Moreover, if the dynamic with time constant RC is designed to be much slower than the intrinsic feedback loop of the power supply, the design of the circuit stability is facilitated by the fact that the feedback network does not interact significantly with the intrinsic feedback of the power supply.

In other words, an external feedback network which acts on the adjustable feedback block of the power supply with a slower time constant than that of the feedback loop of the power supply actually decouples the lighting branches from the feedback block of the power supply, thus allowing the lighting sources to be considered as a load rather than a part of the feedback path.

Since the output supply voltage Vout is set according to the value of Vreg, such an architecture is able to also control additional loads, without affecting the current flow of the lighting source. Therefore, the same supply voltage Vout can be used as input to additional circuits (e.g., voltage controllers).

According to an aspect of the invention, the control circuit therefore comprises any decoupling tripole having a transfer function that varies in an electrically controlled, linear or non-linear manner, as a function of an input voltage or current present on the current control device and which acts on the feedback block of the adjustable power supply.

Such a control circuit corresponds to that shown in the block diagram in figure 2 and to a circuit implementation thereof shown in figure 4, where the feedback block consists of the output voltage divider of the adjustable power supply, formed by resistors and an electrically adjustable impedance element.

It is noted that, according to this aspect of the invention, the non-linear feedback network 20 can be replaced by another feedback network, also linear, for example implemented with amplifiers, provided that its output is connected to the feedback block of the power supply.

Figure 7 shows a circuit implementation of the control circuit architecture in figure 3. Also in this case, the non-linear feedback network 20 is implemented with the feedback selector circuit described above.

However, the adjustment terminal 104 in output to the non-linear feedback network acts on a reference voltage setting network 30 defining the reference voltage internal to the adjustable power supply 10.

For example, this setting network 30 comprises a constant resistor 302 and an electrically adjustable impedance element 304, 306 connected mutually in parallel. In one embodiment, this electrically adjustable impedance element 304, 306 comprises a constant resistance element 304 placed in series to a transistor 306, for example a MOS-FET, the gate terminal whereof coincides with, or is connected to, the adjustment terminal 104, so as to be driven by the feedback network 20.

Depending on the value of voltage Vsw of the control node 202, the impedance value of the electrically adjustable impedance element 306 varies, thereby modifying the overall impedance value of the setting circuit 30 and therefore the value of the reference voltage internal to the power supply.

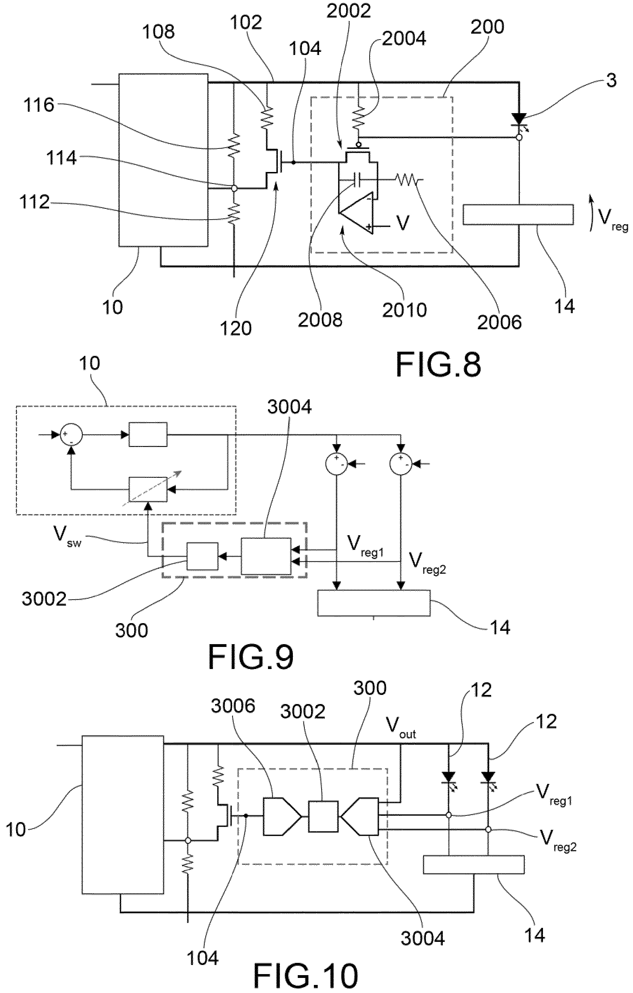

Figure 8 shows a circuit diagram similar to that in figure 4, but in which the non-linear feedback network 200 is implemented with active components.

For example, the non-linear feedback network 200 comprises a control switch 2002, in the example implemented with a P-MOS, having its gate terminal connected to the output terminal 102 of the adjustable power supply 10 by means of a resistive element 2004, and connected to the current control device 14, the source terminal operatively connected to the adjustment terminal 104, and the drain terminal connected to ground by means of a resistor 2006.

A capacitor 2008 is connected between the source terminal and the drain terminal.

The feedback network 200 further comprises an operational amplifier 2010 having the inverting input terminal connected to the drain terminal, the non-inverting input terminal to a reference voltage V, and the output terminal connected to the source terminal.

In this way, when the voltage at the terminals of the current control device 14 falls below the voltage value given, with good approximation, by the difference between the voltage of the source terminal and the gate-source threshold voltage of the control switch 2002, the channel resistance of such a control switch reduces rapidly so as to quickly discharge capacitor 2008 placed between source and drain. In this way, the output of operational amplifier 2010, and then the control node voltage value, varies rapidly. Due to the action of the control signal present on the control node, the value of the output supply voltage also rapidly increases.

When the voltage at the terminals of the current control device exceeds the voltage value given by the difference between the voltage of the source terminal and the gate-source threshold voltage of the P-MOS, the P-MOS is cut off and the output of the operational amplifier, and thus the value of the control node voltage, varies according to the time constant RC given by the resistor connected between the inverting terminal of the amplifier and ground, and by the capacitor placed between drain and source. Due to the action of the control signal present on the control node, the value of the output supply voltage also rapidly decreases according to such a dynamic.

In this way, a fast response of the control circuit can be obtained when the Vreg drops too much, in order to instantaneously restore the output voltage Vout, while a slower response can be obtained to decrease the output voltage Vout when necessary.

Figure 9 shows a block diagram similar to that in figure 2, thus with a non-linear feedback network acting on an adjustable feedback block 108 of the adjustable power supply 10, where the non-linear feedback network, indicated with 300, is based on a microprocessor 3002 and on a detection network 3004 of the voltage drops Vregk at the terminals of the current control device 14.

A possible implementation of the diagram in figure 9 is shown in figure 10, in which a multichannel analog-digital converter ADC 3004 is used to detect the multiple signals Vregk and Vout, while a digital-analog converter DAC 3006 is used to generate the adjustment signal Vsw.

In this case, the non-linear feedback is implemented by the internal code of microprocessor 3002, which generates the adjustment signal Vsw as a function of the detected signals Vregk and Vout.

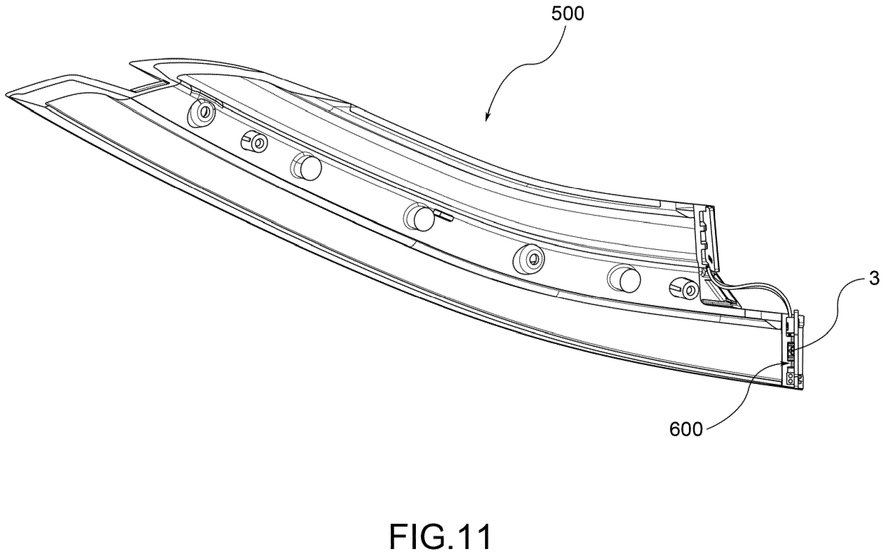

With reference to the example shown in figure 11, an object of the present invention is also an automotive headlight 500 provided with a control circuit 600 of lighting sources, such as LED or OLED.

A man skilled in the art may make several changes, adjustments, adaptations and replacements of elements with other functionally equivalent ones to the embodiments of the control circuit according to the invention in order to meet incidental needs, without departing from the scope of the following claims.

For example, the feedback selector circuit that implements the non-linear feedback network may be connected to a voltage different from the supply voltage Vout, provided that the voltage on the resistive element of the selector circuit is greater than the voltage of the control node.

**Claims**

1. Driver circuit of light sources, comprising:

   - an adjustable power supply unit (10), having a control loop of an output power supply voltage (Vout)

      provided at an output terminal (102) of the adjustable power supply unit (10) ;
      said control loop comprising an adjustable feedback block (108) which is adapted to provide in output a feedback signal (108') to be compared with a first reference voltage (Vref) inside the power supply unit;

   - at least one lighting branch (12) powered by said output power supply voltage (Vout), said lighting branch comprising at least one light source (3);
   - a current control device (14) connected in series to a respective lighting branch and suitable to adjust a driver current circulating in said lighting branch;
   - a feedback network (200) which is adapted to provide a regulation signal (Vsw) to said adjustable feedback block (108) at a regulation terminal (104), so as to adjust the output power supply voltage (Vout) as a function of a voltage drop (Vreg) at terminals of the respective current control device (14),
   where the feedback network (200) comprises a feedback selector circuit with active components,
   **characterised in that** the feedback network comprises:

      - a P-MOS control transistor (2002) having a gate terminal connected to the output terminal (102) of the adjustable power supply unit (10) via a resistive element (2004) and connected to the respective current control device (14), a source terminal operatively connected to the regulation terminal (104), and a drain terminal connected to earth via a resistance (2006);
      - a capacitor (2008) connected between the source terminal and the drain terminal; and
      - an operational amplifier (2010) having an inverting input terminal connected to the drain terminal, the non-inverting input terminal connected to a second reference voltage, and an output terminal of the operational amplifier connected to the source terminal, in such a way that,
      - when the voltage drop at the terminals of the respective current control device (14) falls below a voltage value which is given, with good approximation, by a difference between a voltage of the source terminal and a gate-source threshold voltage of the control transistor (2002) the channel resistance of said control transistor is rapidly reduced so as to quickly discharge the capacitor (2008) placed between the source and drain, causing a rapid change in output of the operational amplifier (2010), and thus of the regulation signal (Vsw) ;
      - when the voltage drop at the ends of the current control device (14) exceeds the voltage value given by the difference between the voltage of the source terminal and the gate-source threshold voltage of the control transistor, the control transistor is cut off and the output of the operational amplifier, and thus the regulation signal (Vsw), varies according to a time constant, RC, given by the resistor (2006) connected between the inverting terminal of the operational amplifier and earth, and by a capacity of the capacitor (2008) placed between the drain terminal and the source terminal.

2. Driver circuit according to the preceding claim, where said feedback block of the adjustable power supply unit comprises an electrically adjustable impedance element (120) having a control terminal connected to the regulation terminal (104) and thereby connected to an output of the feedback network (200) and by means of which control terminal it is possible to change a value of said impedance element (120) based on the regulation signal (Vsw) provided by the feedback network as a function of the voltage drop (Vreg) at the terminals of the respective current control device (14).

3. Driver circuit according to the preceding claim, wherein said feedback block of the adjustable power supply unit (108) comprises a voltage divider, comprising a first impedance (112) between a feedback terminal (114) and earth and a second impedance (116, 120) between the output terminal (102) of the adjustable power supply unit and the feedback terminal (114), said second impedance comprising a constant impedance (116) and the electrically adjustable impedance element (120).

4. Driver circuit according to any of the claims 2-3, where the electrically adjustable impedance element (120) is a transistor.

5. Driver circuit according to any of the claims 3-4, in which said constant impedance consists of a resistor.

6. Driver circuit according to any of the claims 3-4, in which said constant impedance consists of a capacitor with varicap.

7. Vehicle light, comprising a driver circuit of lighting sources according to any of the preceding claims.

**Patentansprüche**

1. Treiberschaltung für Lichtquellen, umfassend:

- eine einstellbare bzw. anpassbare Leistungsversorgungseinheit (10) mit einer Steuer- bzw. Regelschleife für eine Ausgangsleistungsversorgungsspannung (Vout), die an einem Ausgangsanschluss (102) der einstellbaren Leistungsversorgungseinheit (10) bereitgestellt ist;
wobei die Regelschleife einen einstellbaren bzw. anpassbaren Rückkopplungsblock (108) umfasst, der angepasst ist, am Ausgang bzw. ausgangsmäßig ein Rückkopplungssignal (108') bereitzustellen, das mit einer ersten Referenzspannung (Vref) innerhalb der Leistungsversorgungseinheit zu vergleichen ist;

- zumindest einen Beleuchtungszweig (12), der durch die Ausgangsleistungsversorgungsspannung (Vout) angetrieben bzw. mit Energie versorgt wird, wobei der Beleuchtungszweig zumindest eine Lichtquelle (3) umfasst;
- eine Stromsteuer- bzw. -regelvorrichtung (14), die in Reihe mit einem jeweiligen Beleuchtungszweig verbunden bzw. geschaltet und geeignet ist, einen in dem Beleuchtungszweig zirkulierenden Treiberstrom einzustellen bzw. anzupassen;
- ein Rückkopplungsnetzwerk (200), das angepasst ist, dem einstellbaren Rückkopplungsblock (108) an einem Regulierungsanschluss (104) ein Regulierungssignal (Vsw) bereitzustellen, um die Ausgangsleistungsversorgungsspannung (Vout) als Funktion eines bzw. in Abhängigkeit von einem Spannungsabfall (Vreg) an Anschlüssen der jeweiligen Stromsteuer- bzw. -regelvorrichtung (14) einzustellen bzw. anzupassen,

wobei das Rückkopplungsnetzwerk (200) eine Rückkopplungsselektorschaltung mit aktiven Komponenten umfasst,
**dadurch gekennzeichnet, dass** das Rückkopplungsnetzwerk umfasst:

- einen P-MOS-Steuer- bzw. -Regeltransistor (2002) mit einem Gate-Anschluss, der über ein Widerstandselement (2004) mit dem Ausgangsanschluss (102) der einstellbaren Leistungsversorgungseinheit (10) verbunden und mit der jeweiligen Stromsteuer- bzw. -regelvorrichtung (14) verbunden ist, einem Source-Anschluss, der operativ mit dem Regulierungsanschluss (104) verbunden ist, und einem Drain-Anschluss, der über einen Widerstand (2006) mit Erde verbunden ist;
- einen Kondensator (2008), der zwischen dem Source-Anschluss und dem Drain-Anschluss verbunden bzw. geschaltet ist; und
- einen Operations- bzw. Betriebsverstärker (2010) mit einem invertierenden Eingangsanschluss, der mit dem Drain-Anschluss verbunden ist, wobei der nicht invertierende Eingangsanschluss mit einer zweiten Referenzspannung verbunden ist und ein Ausgangsanschluss des Operationsverstärkers mit dem Source-Anschluss verbunden ist, und zwar derart, dass
- wenn der Spannungsabfall an den Anschlüssen der jeweiligen Stromsteuer- bzw. -regelvorrichtung (14) unter einen Spannungswert fällt, der mit guter Näherung durch eine Differenz zwischen einer Spannung des Source-Anschlusses und einer Gate-Source-Schwellenspannung des Steuer- bzw. Regeltransistors (2002) gegeben ist, der Kanalwiderstand des Steuer- bzw. Regeltransistors schnell verringert wird, um den zwischen Source und Drain platzierten Kondensator (2008) schnell zu entladen, was eine schnelle Änderung der Ausgabe des Operationsverstärkers (2010) und damit des Regulierungssignals (Vsw) bewirkt;
- wenn der Spannungsabfall an den Enden der Stromsteuer- bzw. - regelvorrichtung (14) den Spannungswert überschreitet, der durch die Differenz zwischen der Spannung des Source-Anschlusses und der Gate-Source-Schwellenspannung des Steuer- bzw. Regeltransistors gegeben ist, der Steuer- bzw. Regeltransistor abgeschaltet und der Ausgang des Operationsverstärkers und damit das Regulierungssignal (Vsw) gemäß einer Zeitkonstante, RC, variiert, die durch den Widerstand (2006) gegeben ist, der zwischen dem invertierenden Anschluss des Operationsverstärkers und Erde verbunden bzw. geschaltet ist, und durch eine Kapazität des Kondensators (2008), der zwischen dem Drain-Anschluss und dem Source-Anschluss platziert ist.

**2.** Treiberschaltung nach dem vorhergehenden Anspruch, wobei der Rückkopplungsblock der einstellbaren Leistungsversorgungseinheit ein elektrisch einstellbares bzw. anpassbares Impedanzelement (120) mit einem Steuer- bzw. Regelanschluss umfasst, der mit dem Regulierungsanschluss (104) verbunden ist und dadurch mit einem Ausgang des Rückkopplungsnetzwerks (200) verbunden ist, und mit dessen Steuer- bzw. Regelanschluss es möglich ist, einen Wert des Impedanzelements (120) basierend auf dem von dem Rückkopplungsnetzwerk bereitgestellten Regulierungssignal (Vsw) als Funktion des bzw. in Abhängigkeit von dem Spannungsabfall (Vreg) an den Anschlüssen der jeweiligen Stromsteuer- bzw. -regelvorrichtung (14) zu ändern.

**3.** Treiberschaltung nach dem vorhergehenden Anspruch, wobei der Rückkopplungsblock der einstellbaren Leistungsversorgungseinheit (108) einen Spannungsteiler umfasst, der eine erste Impedanz (112) zwischen einem Rückkopplungsanschluss (114) und Erde und eine zweite Impedanz (116, 120) zwischen dem Ausgangsanschluss (102) der einstellbaren Leistungsversorgungseinheit und dem Rückkopplungsanschluss (114) umfasst, wobei die zweite Impedanz eine konstante Impedanz (116) und das elektrisch einstellbare Impedanzelement (120) umfasst.

**4.** Treiberschaltung nach einem der Ansprüche 2-3, wobei das elektrisch einstellbare Impedanzelement (120) ein Transistor ist.

**5.** Treiberschaltung nach einem der Ansprüche 3-4, wobei die konstante Impedanz aus einem Widerstand besteht.

**6.** Treiberschaltung nach einem der Ansprüche 3-4, wobei die konstante Impedanz aus einem Kondensator mit Varicap besteht.

**7.** Fahrzeugleuchte, umfassend eine Treiberschaltung für Lichtquellen nach einem der vorhergehenden Ansprüche.

**Revendications**

**1.** Circuit d'attaque de sources lumineuses, comprenant :

- une unité d'alimentation électrique (10) réglable ayant une boucle de régulation d'une tension de sortie d'alimentation électrique (Vout) fournie à une borne de sortie (102) de l'unité d'alimentation électrique (10) réglable ;
ladite boucle de régulation comprenant un bloc de rétroaction (108) réglable qui est adapté pour fournir en sortie un signal de rétroaction (108') à comparer à une première tension de référence (Vref) à l'intérieur de l'unité d'alimentation électrique ;
- au moins une branche d'éclairage (12) alimentée par ladite tension de sortie d'alimentation électrique (Vout), ladite branche d'éclairage comprenant au moins une source lumineuse (3) ;
- un dispositif de régulation de courant (14) relié en série à une branche d'éclairage respective et en mesure d'ajuster un courant d'attaque circulant dans ladite branche d'éclairage ;
- un réseau de rétroaction (200) qui est adapté pour fournir un signal de régulation (Vsw) audit bloc de rétroaction (108) réglable à une borne de régulation (104) afin d'ajuster la tension de sortie d'alimentation électrique (Vout) en fonction d'une chute de tension (Vreg) à des bornes du dispositif de régulation de courant (14) respectif,
où le réseau de rétroaction (200) comprend un circuit de sélection de rétroaction avec des composants actifs,

**caractérisé en ce que** le réseau de rétroaction comprend :

- un transistor de commande P-MOS (2002) ayant une borne de grille reliée à la borne de sortie (102) de l'unité d'alimentation électrique (10) réglable par le biais d'un élément résistif (2004) et reliée au dispositif de régulation de courant (14) respectif, une borne de source fonctionnellement reliée à la borne de régulation (104) et une borne de drain relié à la masse par le biais d'une résistance (2006) ;

- un condensateur (2008) relié entre la borne de source et la borne de drain ; et un amplificateur opérationnel (2010) ayant une borne d'entrée inverseuse reliée à la borne de drain, la borne d'entrée non-inverseuse reliée à une deuxième tension de référence, et une borne de sortie de l'amplificateur opérationnel reliée à la borne de source de façon telle que

- lorsque la chute de tension aux bornes du dispositif de régulation de courant (14) respectif descend en-dessous d'une valeur de tension qui est donnée, avec une bonne approximation, par une différence entre une tension de la borne de source et une tension de seuil grille-source du transistor de commande (2002), la résistance de canal dudit transistor de commande est réduite rapidement afin de décharger rapidement le condensateur (2008) placé entre la source et le drain, ayant pour conséquence un changement rapide en sortie de l'amplificateur opérationnel (2010) et ainsi du signal de régulation (Vsw) ;

- lorsque la chute de tension aux extrémités du dispositif de régulation de courant (14) dépasse la valeur de tension donnée par la différence entre la tension de la borne de source et la tension de seuil grille-source du transistor de commande, le transistor de commande est déconnecté et la sortie de l'amplificateur opérationnel, et ainsi le signal de régulation (Vsw), varie selon une constante de temps RC donnée par la résistance (2006) connectée entre la borne inverseuse de l'amplificateur opérationnel et la masse et par une capacité du condensateur (2008) placé entre la borne de drain et la borne de source.

2. Circuit d'attaque selon la revendication précédente, dans lequel le bloc de rétroaction de l'unité d'alimentation électrique réglable comprend un élément d'impédance (120) électriquement réglable avec une borne de commande reliée à la borne de régulation (104) et ainsi reliée à une sortie du réseau de rétroaction (200) et par le biais de laquelle borne de régulation, il est possible de changer une valeur dudit élément d'impédance (120) sur la base du signal de régulation (Vsw) fourni par le réseau de rétroaction en fonction de la chute de tension (Vreg) aux bornes du dispositif de régulation de courant (14) respectif.

3. Circuit d'attaque selon la revendication précédente, dans lequel le bloc de rétroaction de l'unité d'alimentation électrique (108) réglable comprend un diviseur de tension avec une première impédance (112) entre une borne de rétroaction (114) et la masse et une deuxième impédance (116, 120) entre la borne de sortie (102) de l'unité d'alimentation électrique réglable et la borne de rétroaction (114), ladite deuxième impédance comprenant une impédance constante (116) et l'élément d'impédance (120) électriquement réglable.

4. Circuit d'attaque selon l'une des revendications 2 à 3, dans lequel l'élément d'impédance (120) électriquement réglable est un transistor.

5. Circuit d'attaque selon l'une des revendications 3 à 4, dans lequel l'impédance constante est constituée par une résistance.

6. Circuit d'attaque selon l'une des revendications 3 à 4, dans lequel l'impédance constante est constituée par un condensateur avec capacité variable.

7. Phare de voiture comprenant un circuit d'attaque de sources lumineuses selon l'une des revendications précédentes.

FIG.1

FIG.2

FIG.3

FIG.4

FIG.5

FIG.6

FIG.7

FIG.8

FIG.9

FIG.10

FIG.11

EP 3 344 013 B1

**EP 3 344 013 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013076685 A1
- US 2016302270 A
- US 2006108933 A1
- US 2010327835 A1
- US 2010134040 A1
- US 2008111800 A1
- US 2010026203 A1
- EP 3258745 A1
- US 2007273681 A1